# EUROPÄISCHE PATENTSCHRIFT

(11) **EP 2 233 393 B1**
(45) Veröffentlichungstag und Bekanntmachung des Hinweises auf die Patenterteilung: **06.01.2016**
(21) Anmeldenummer: 10157279.0
(22) Anmeldetag: 23.03.2010
(51) Int. Cl.: B64C 1/30, B64C 27/08, B64C 39/02, A63H 27/00

(54) **Verriegelungssystem**
Locking system
Système de verrouillage

(30) Priorität: 23.03.2009 DE 102009001759
(43) Veröffentlichungstag der Anmeldung: 29.09.2010
(73) Patentinhaber: Schnoell, Gregor, 4432 Ernsthofen (AT)
(72) Erfinder: Schnoell, Gregor, 4432 Ernsthofen (AT)
(74) Vertreter: Westphal, Mussgnug & Partner Patentanwälte mbB

(56) Entgegenhaltungen:
- DE-A1-102005 014 949
- DE-U1-202006 013 909
- FR-A1- 2 909 972
- GB-A- 2 449 976
- US-A1- 2006 277 727

## Beschreibung

Die Erfindung betrifft ein Verriegelungssystem, insbesondere zur leicht handhabbaren Arretierung von einem oder mehreren Auslegern an einem zentralen Lager, beispielsweise zur Fixierung von klappbaren Auslegern eines Helikopters mit zwei oder mehr Rotoren (z.B. Quadrocopter, auch Quadrotor-Helikopter).

Um das der Erfindung zugrunde liegende technische Problem anschaulich zu illustrieren wird dieses im Folgenden beispielhaft anhand eines Quadrotor-Helikopters (Helikopter mit vier Rotoren) erläutert. Zu den Vorteilen des 4-Rotoren-Konzepts zählt die Möglichkeit einer Steuerung um alle Achsen allein über die Drehzahl von vier starren Rotoren, also ohne Mechanik außer drehenden Wellen, insbesondere ohne kollektive und zyklische Rotorblattverstellung. Quadrotor-Helikopter können demnach mechanisch sehr minimalistisch aufgebaut werden. Beispiele für bekannte Quadrotor-Helikopter-Konstruktionen sind in den Publikationen DE 20 2006 013 909 U1 und FR 2 909 972 A1 bekannt.

Quadrotor-Helikopter können für die unterschiedlichsten Aufgaben eingesetzt werden, z.B. als Modellflugzeug, sowie als unbemanntes Luftfahrzeug (UAV, Drohne) mit einer Kamera und/oder anderen Sensoren zur Luftraumüberwachung, zum Einsatz in der Vermessungstechnik, zur Überprüfung von z.B. Staudämmen oder anderen Bauwerken, zur Suche nach vermissten Personen, etc. Aus aerodynamischen Gründen ist es wünschenswert, die Rotoren möglichst groß zu machen, sodass bei üblichen Bauweisen die räumlichen Abmessungen des Helikopters im Wesentlichen durch die Durchmesser der Rotoren bestimmt werden.

Bei einem elektrisch betriebenen Quadrotor-Helikopter sind an einem zentralen Bauteil, in dem die Steuerelektronik und die Stromversorgung untergebracht sind vier Ausleger montiert, an deren Enden jeweils ein Rotor (Propeller) montiert ist. Die Spannweite (d.h. die äußeren Abmessungen in horizontaler Richtung) beträgt bei üblichen Bauweisen je nach Fluglage rund die zweifache Länge vom Zentrum des Fluggerätes bis hin zur Rotorwelle, die an dem Ausleger angeordnet ist, zuzüglich dem einfachen Propellerdurchmesser, bei einem Quadrotor-Helikopter entspricht das der Seitenlänge des durch die Rotorwellen beschriebenen Quadrates zuzüglich dem einfachen Propellerdurchmesser. Das Fluggerät ist daher sehr sperrig, was dessen Transport am Boden verkompliziert.

Um die Transportgröße eines derartigen Fluggerätes zu verkleinern können die Ausleger mit den Rotoren von dem Zentralen Bauteil abgenommen werden oder alternativ von einer horizontalen Position in eine vertikale Position geklappt werden, was die Sperrigkeit des Fluggerätes reduziert und den Transport vereinfacht. Vor der Inbetriebnahme müssen die Ausleger mit den Rotoren ausgeklappt (bei klappbaren Lösungen) oder an dem zentralen Bauteil montiert (bei Lösungen mit abnehmbaren Auslegern) werden. In beiden Fällen ist eine mechanische Verriegelung bzw. Fixierung notwendig, welche die Ausleger während des Betriebs in der vorgesehenen Position hält. Bei bekannten Ausführungen dieser Art ist ein entsprechender Montageaufwand zur Inbetriebnahme erforderlich. Zusammenklappbare Quadrotor-Helikopter sind z.B. aus der Veröffentlichung DE 10 2005 014 949 A1 bekannt.

Des weiteren transportieren Quadrotor-Helikopter meist eine Nutzlast wie z.B. eine Kamera und/oder andere Sensoren (z.B. Infrarot-, Laser- oder Radarsensoren), die zur Erfüllung einer Bestimmten Aufgabe benötigt werden. Zur Montage der Nutzlast an dem zentralen Bauteil ist ein Verbindungselement notwendig.

Das Gesamtgewicht des Fluggerätes ist eine kritische Größe, da dieses sich unmittelbar auf die zur Verfügung stehende Flugzeit auswirkt. Insbesondere bei elektrisch betriebenen Fluggeräten sind selbst minimale Gewichtseinsparungen ein wünschenswertes Konstruktionsziel.

Die der Erfindung zugrunde liegende Aufgabe besteht darin, ein möglichst einfaches Verriegelungssystem zur Verfügung zu stellen, sodass der Montageaufwand bei bzw. vor der Inbetriebnahme reduziert ist.

Diese Aufgabe wird durch das Verriegelungssystem gemäß Anspruch 1 gelöst. Verschiedene Weiterbildungen der Erfindung sind Gegenstand der abhängigen Ansprüche.

Ein Beispiel der Erfindung betrifft ein Verriegelungssystem, das Folgendes aufweist: ein Zentralteil mit mehreren Anschlagselementen; zwei oder mehr Ausleger, die an dem Zentralteil angelenkt oder mit diesem lösbar verbunden sind; und ein in den Zentralteil zumindest teilweise einführbares und von diesem lösbares Verschlussteil, wobei Zentralteil und Verschlussteil derart geformt sind, dass bei einer Dreh- und/oder Verschiebebewegung des Zentralteils relativ zum Verschlussteil diese beiden Teile mechanisch derart ineinander greifen, dass die Ausleger zwischen den Anschlagelementen des Zentralteils und dem Verschlussteil arretiert werden.

Eine Weiterbildung der Erfindung betrifft einen Helikopter mit Folgenden Komponenten: ein Zentralteil mit mehreren Anschlagselementen; zwei oder mehr Rotoren, die jeweils an einem Ausleger montiert sind, wobei die Ausleger an dem Zentralteil angelenkt oder mit diesem lösbar verbunden sind; einem in den Zentralteil zumindest teilweise einführbaren und von diesem lösbaren Verschlussteil, wobei Zentral teil und Verschlussteil derart geformt sind, dass bei einer Dreh- und/oder Verschiebebewegung des Zentralteils relativ zum Verschlussteil diese beiden Teile mechanisch derart ineinander greifen, dass die Ausleger zwischen den Anschlagelementen des Zentralteils und dem Verschlussteil arretiert werden.

Die folgenden Figuren und die weitere Beschreibung sollen helfen, die Erfindung besser zu verstehen. Die Elemente in den Figuren sind nicht unbedingt als Einschränkung zu verstehen, vielmehr wird Wert darauf gelegt, das Prinzip der Erfindung darzustellen. In den Figuren bezeichnen gleiche Bezugszeichen korrespondierende Teile.
- Figur 1: zeigt eine perspektivische Darstellung eines Quadrotor-Helikopters mit vier jeweils auf einem Ausleger montierten Rotoren in einer ausgeklappten Betriesposition (Ansicht (a)) und eine Darstellung in einer Transportposition (Ansicht (b));
- Figur 2: ist eine perspektivische Schnittdarstellung durch den Quadrotor-Helikopters aus Figur 1;
- Figur 3: zeigt ein Beispiel eines Verschlussteils;
- Figur 4: zeigt ein Beispiel einer axialen Fixierung der Ausleger (Ansicht (a): offene Stellung, Ansticht (b): arretierte Stellung).

Im Folgenden wird die Erfindung unter Bezugnahme auf die in den Figuren dargestellten Beispiele näher erläutert.

Als erstes Beispiel der Erfindung wird ein Verriegelungssystem zur mechanischen Arretierung der vier Ausleger eines Quadrotor-Helikopters an einem zentralen Trägerbauteil (Zentralteil) beschrieben.

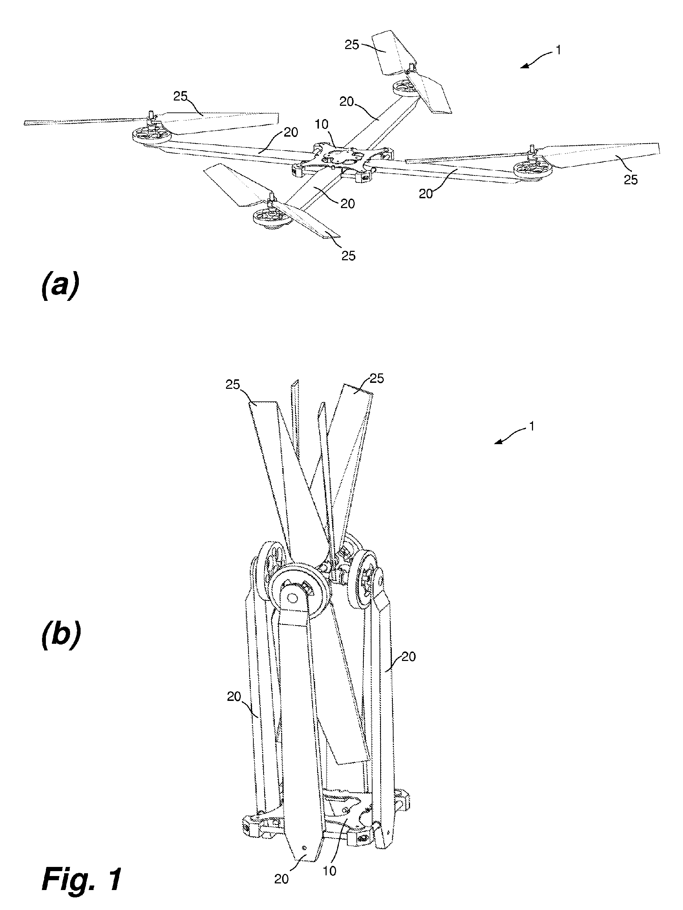

Figur 1 zeigt einen Helikopter 1 mit einem zentralen Trägerbauteil (Zentralteil 10) und vier Auslegern 20, an denen jeweils ein Rotor 25 montiert ist. Im Fall von einem elektrisch angetriebenen Helikopter ist in oder an jedem Ausleger 20 auch ein Elektromotor zum Antrieb des dazugehörigen Rotors 25 angeordnet. Spezielle Ausführungen ermöglichen auch den Antrieb der Rotoren von einer vorzugsweise zentral angeordneten Antriebseinheit. Die elektronische Steuerung des Helikopters und die Energieversorgung (Akkumulator) können in oder an dem Zentralteil 10 angeordnet sein. Die äußeren Abmessungen in horizontaler Richtung liegen bei einem derartigern Helikopter beispielsweise in einem Bereich von einem Meter bis rund vier Meter. Das Fluggerät ist für Transport am Boden verhältnismäßig sperrig. Um eine bessere Transportierbarkeit zu erreichen, können die Ausleger 20 samt Rotoren 50 hochgeklappt werden (siehe Figur 1b). In dem in Figur 1a dargestellten Beispiel ist der Quadrotor-Helikopter in einer Betriebsposition, d.h. in einer ausgeklappten Stellung dargestellt, in der alle Ausleger 20 am Zentralteil 10 arretiert sind. Figur 1b zeigt den gleichen Quadrotor-Helikopter in einer Transportposition, nachdem die Ausleger 20 hochgeklappt wurden. Alternativ können die Ausleger 20 auch lösbar mit dem Zentralteil 10 verbunden sein, sodass die Ausleger 20 abgenommen werden können.

Bei derartigen für den Bodentransport zerlegbaren oder klappbaren Fluggeräten ist ein Verriegelungssystem notwendig, dass für den Flugbetrieb die Ausleger 20 an dem Zentralteil 10 arretiert sind. Beispielsweise können die Ausleger auf das Zentralteil aufsteckbar sein, wobei zur Sicherung die Ausleger und das Zentralteil verschraubt werden können. Derartige Lösungen sind unpraktisch, da der Montageaufwand vor der Inbetriebnahme hoch ist und mehrere einzelne Montageteile notwendig sind, die das Gesamtgewicht des Fluggerätes erhöhen. Wünschenswert wäre eine Lösung mit klappbaren oder abnehmbaren Auslegern, die sehr einfach in einer Betriebsposition (d.h. einer Sollposition, bei Fluggeräten die Flugposition) arretierbar sind und der Gewichtsersparnis wegen nur wenige Einzelteile benötigen.

In den folgenden Figuren ist ein Verriegelungssystem dargestellt, das sehr einfach zu handhaben ist und extrem leicht aufgebaut werden kann. Des weiteren ist es möglich neben der mechanischen Verriegelung (Arretierung) auch elektrische Verbindung zwischen den einzelnen Komponenten des System auf einfache Weise herzustellen.

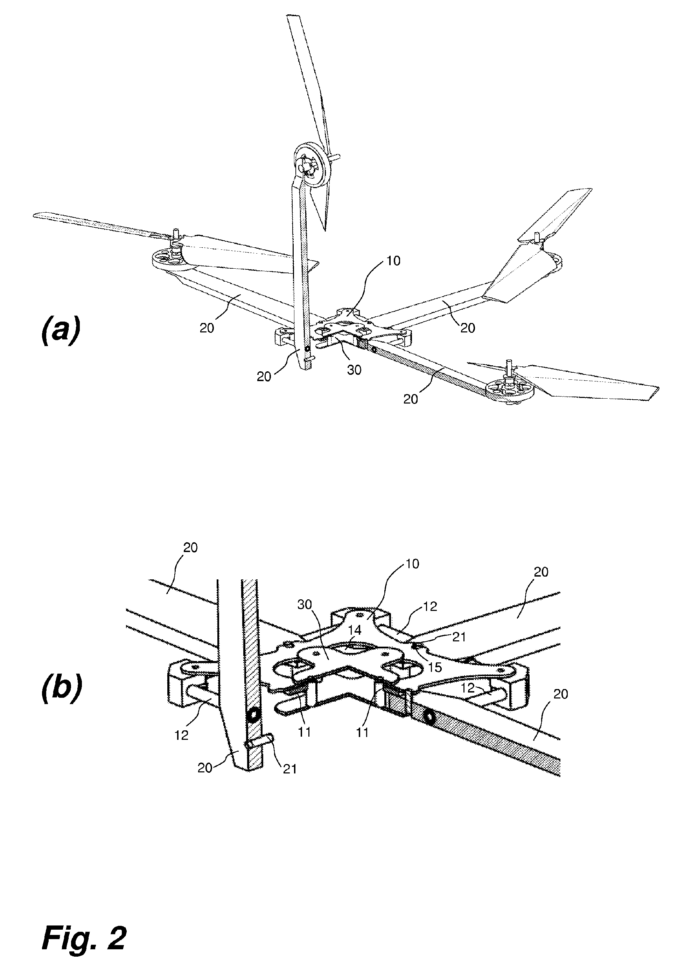

Figur 2a zeigt als ein Beispiel der Erfindung einen Schnitt durch den in Figur 1 dargestellten Quadrotor-Helikopter, wobei nur jene Komponenten dargestellt sind, die für die folgende Erläuterung notwendig sind. Die übrigen Komponenten sind der Übersichtlichkeit halber weggelassen. Es sind im Wesentlichen jene Komponenten dargestellt, die das erwähnte Verriegelungssystem betreffen. Figur 2b ist einer vergrößerte Darstellung eines Teils der Figur 1a mit dem Zentralteil 10 und Teilen der Auslagen 20.

Das System besteht aus einem zentralen Trägerbauteil (Zentralteil 10) mit zwei oder mehr Ausleger 20. Im dargestellten Fall sind vier Ausleger 20 an dem Zentralteil 10 angelenkt, sodass jeder der Ausleger 20 eine Drehbewegung um eine horizontale Achse ausführen kann, d.h. die Ausleger lassen sich von einer Betriebsposition (z.B. einer horizontalen Position) in eine Transportposition (z.B. eine vertikale Position) schwenken. In der Betriebsposition sind die Ausleger ausgeklappt. Diese müssen in der ausgeklappten Betriebsposition jedoch nicht zwangsläufig in einer horizontalen Ebene liegen. In der Praxis können die Ausleger auch eine (leichte) Schrägstellung einnehmen. Alternativ können die Ausleger 20 lösbar mit dem Zentralteil 10 verbunden sein, beispielsweise können die Ausleger 20 auf das Zentralteil 10 aufsteckbar sein.

Das Zentralteil 10 weist ein Führungselement auf. Im dargestellten Beispiel ist dies eine Achse 12, die durch eine korrespondierende Bohrung in dem Ausleger 20 geführt ist, sodass der Ausleger 20 um die Achse 12 schwenkbar ist und die oben beschriebene Schwenkbewegung ausführen kann. Alternativ kann auch die Achse 12 mit dem Ausleger fix verbunden sein, in diesem Fall ist das Führungselement des Zentralteils 10 eine korrespondierende Bohrung im Zentralteil 10. Das Führungselement (z.B. die Achse 12) dient sozusagen als Teil der Lagerung.

In der Sollposition liegt der Ausleger an einem Anschlag 11 des Zentralteils 10 an. Der Anschlag 11 kann ein Teil des Zentralteils selbst sein, z.B. ein Bereich eines Formteiles, aus dem der Zentralteil 10 besteht. Alternativ kann der Anschlag 11 aber auch aus einem elastischen Material bestehen. Dies kann z.B. dann sinnvoll sein, um Maß-, Form- und Lagetoleranzen im Betriebszustand auszugleichen und ein "Klappern" des Systems zu verhindern. Zusätzlich kann der Anschlag 11 auch aus einem schwingungsdämpfenden Material bestehen, z.B. einem Elastomer, um die Ausleger 20 und den Zentralteil 10 zumindest teilweise mechanisch zu entkoppeln, sodass die z.B. durch die Rotoren verursachten Schwingungen in den Auslegern 20 nicht voll auf die übrigen Komponenten des Verriegelungssystems (bzw. des Helikopters) übertragen werden. Je nach Anwendung kann eine derartige Dämpfung notwendig oder zumindest sinnvoll sein oder auch nicht.

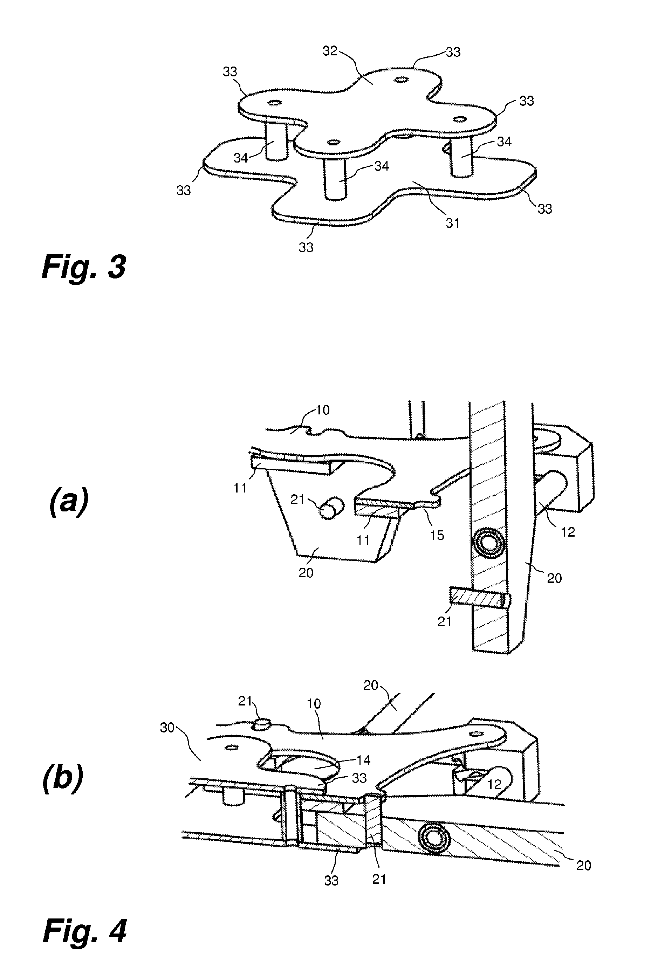

Durch das Führungselement (z.B. die Achse 12) des Zentralteils wird der Ausleger in der Sollposition bereits in einigen mechanischen Freiheitsgraden fixiert. Es verbleibt jedoch (im in der Figur 2 dargestellten Fall) die Möglichkeit der Schwenkbewegung um die Achse 12. Des Weiteren ist auch noch eine Verschiebebewegung entlang des Führungselementes möglich. Bei fix montierten schwenkbaren Auslegern 20 kann diese Verschiebebewegung durch eine fixe Lagerung an der Achse, die keine axiale Bewegung zulässt gesperrt werden. Eine kostengünstige, alternative Lösung ist es, jeweils an einem Ausleger 20 einen Vorsprung 21 und an dem Zentralteil 10 eine korrespondierende Ausnehmung 15 vorzusehen, oder umgekehrt. Im dargestellten Fall ist der Vorsprung ein Teil einer Schraube (z.B. der Schraubenkopf), der in einen Ausleger 20 geschraubt ist und der in eine entsprechende Ausnehmung (z.B. eine Bohrung) am Zentralteil eingreift, so dass eine Verschiebebewegung entlang des Führungselementes blockiert ist. Statt einer Schraube kann auch an dem Ausleger auch eine Rastnase oder Ähnliches vorgesehen sein. Das Paar aus Vorsprung 21 und Ausnehmung 15 blockieren in der ausgeklappten Betriebsposition eine Verschiebebewegung z.B. entlang der Achse 12 (siehe auch Detaildarstellung in Figur 4).

Für eine vollständige Arretierung umfasst das Verriegelungssystem einen (einzigen) Verschlussteil 30, der zumindest teilweise in den Zentralteil 10 einsetzbar ist. Der Zentralteil 10 und der Verschlussteil 30 sind derart geformt, dass bei einer Dreh- und/oder Verschiebebewegung die beiden Teile 10 und 30 mechanisch derart ineinander greifen, dass der Ausleger 20 zwischen dem Anschlagelement 11 des Zentralteils 10 und dem Verschlussteil 30 arretiert (und der Ausleger 20 folglich an einer Schwenkbewegung gehindert) werden kann. Die Arretierung erfolgt durch eine formschlüssige Verbindung zwischen Verschlussteil 30, Ausleger 20 und Zentralteil 10. Die Dreh- und/oder Verschiebebewegung ist eine Relativbewegung zwischen Zentralteil 10 und Verschlussteil 30. Alternativ kann zur Arretierung auch eine Verschiebebewegung zwischen Verschlussteil 30 und Ausleger 20 stattfinden, z.B. wenn die Ausleger erst nach dem Einsetzen des Verschlussteils 30, welches die Schwenkbewegung sperrt in axialer Richtung (entlang der Führungselemente) fixiert werden.

Wenn, wie oben erwähnt, die Anschlagselemente 11 elastisch ausgebildet sind, wirkt, wenn die Anschlagelemente 11 vor der Arretierung der Ausleger etwas gestaucht werden, eine Vorspannkraft auf die Arretierung. So können die Anschlagelemente 11 fertigungsbedingte Toleranzen ausgleichen und gleichzeitig wird ein "klappern" des Systems verhindert, weil das Spiel zwischen den einzelnen Teilen 10, 20 und 30 auf Null reduziert wird.

Der Zentralteil weist eine zentrale Öffnung 14 auf, wobei diese und der Verschlussteil 30 so geformt sind, dass der Verschlussteil zumindest teilweise in die zentrale Öffnung 14 der Platte 13 einsetzbar ist. Von gewisser Bedeutung ist dabei die Form der Öffnung 14 im Zentralteil 10 und die korrespondierende Form des Verschlussteiles 30. Sowohl die Öffnung 14 als auch der Verschlussteil weisen in unterschiedlichen horizontalen Richtungen unterschiedliche Abmessungen auf. Dies bewirkt, dass in einer ersten Stellung (relativ zum Zentral teil 10) der Verschlussteil 30 zumindest teilweise in den Zentral teil 10 eingesetzt werden kann. In dem in der Figur 2 dargestellten Beispiel kann der Verschlussteil 30 in der ersten Stellung durch die Öffnung 14 des Zentralteils 10 durchgesteckt werden. Wird der Verschlussteil 30 nach dem einsetzen in die Öffnung 14 in eine zweite Stellung (Schließstellung) gedreht, kommen Riegelelemente 33 des Verschlussteiles 30 derart mit dem Zentral teil 10 und den Auslegern 20 in Eingriff, das der Ausleger 20 an dem Anschlagelement 11 des Zentralteils arretiert und eine weitere Schwenkbewegung folglich verhindert wird. Die Arretierung ist eine formschlüssige Verbindung, auf die im Falle elastischer Anschlagselemente 11 oder federnder Riegelelemente 33 eine gewisse Vorspannkraft wirkt. Eine Vorspannkraft könnte auch durch federnd gelagerte, selbst jedoch starre Riegelelemente 33 erreicht werden (zum Verschlussteil 30 mit den Riegelelementen 33 siehe auch die Detaildarstellung in Figur 3).

Bei dem in Figur 2 gezeigten Beispiel erfolgt die Arretierung allein durch eine Drehbewegung des einzigen Verschlussteiles 30 von einer ersten Stellung, in der der Verschlussteil 30 in den Zentralteil 10 eingesetzt wird, in eine zweite Stellung (Schließstellung), in der die Ausleger 20 durch die Riegelelemente 33 des Verschlussteiles 30 am Zentral teil 10 arretiert werden. Es ist jedoch auch möglich den gleichen Effekt durch eine Verschiebebewegung zu erreichen. Beispielsweise, wenn im ausgeklappten Sollzustand der Ausleger 20 noch keine axiale Fixierung erfolgt, können auch die Ausleger 20 gegen den Verschlussteil 30 verschoben werden, so dass die Riegelelemente 33 eingreifen, um eine Schwenkbewegung zu blockieren. Eine Fixierung der Ausleger in axialer Richtung kann dann anschließend auf unterschiedlichste Weise erfolgen, z.B. durch Einrasten einer flexiblen Rastnase des Auslegers in ein korrespondierendes Gegenstück am Zentralteil.

Der Verschlussteil 30 und die Öffnung 14 (genauer: die Kontur der Öffnung) können des Weiteren derart geformt sein, dass der Verschlussteil 30 sich beim Einsetzen in den Zentralteils 10 und/oder bei einer Drehbewegung selbst in der Öffnung 14 zentriert und zumindest in der Schließstellung an der Kontur der Öffnung 14 (abgesehen von einem üblichen, fertigungsbedingten Spiel) anliegt. Damit ist in der Schließstellung der Verschlussteil 30 gegen ein translatorisches Verrutschen relativ zum Zentralteil 10 gesichert. Ein rotatorisches Verrutschen (also ein unerwünschtes Aufdrehen des Verschlussteils 30) könnte z.B. durch Vibrationen verursacht werden. Die kann verhindert werden, entweder durch eine ausreichend hohe Vorspannkraft in der Arretierung, sodass der Verschlussteil (reib-)kraftschlüssig in der Schließstellung gehalten wird, oder formschlüssig, z.B. durch einen Rastmechanismus. So kann z.B. der Verschlussteil 30 und/oder der Zentralteil 10 Rastnasen aufweisen, die in Schließstellung einrasten, um ein Aufdrehen zu verhindern. Es sind dabei keine großen Haltekräfte notwendig, folglich kann dieser Rastmechanismus sehr einfach und kostengünstig ausgeführt werden. Alternativ ist auch eine Fixierung durch einen Splint oder ähnliches möglich.

Im vorliegenden Beispiel besteht der Verschlussteil 30 aus zwei parallel angeordneten Platten 31 und 32, die über zumindest ein Verbindungselement 34 (im vorliegenden Beispiel über vier rohrförmige bzw. stiftförmige Verbindungselemente) verbunden sind. Die Platten 31, 32 weisen für jeden Ausleger je ein Verriegelungselement 33 in Form von Vorsprüngen auf, so dass die Platte im Fall von vier Auslegern gewissermaßen eine X-förmige Grundform (in der Draufsicht) aufweist. Die Öffnung 14 hat eine ähnliche Form. Die Verbindungselemente 34 bilden den Grundkörper, des Verschlussteiles. Die Abmessung des Grundkörpers (im konkreten Fall, der Abstand zwei gegenüberliegender Verbindungselemente 34 plus deren Radien) ist gleich wie eine korrespondierende Weite der Öffnung 14, sodass in der Schließstellung der Verschlussteil 30 an der Kontur der Öffnung zumindest teilweise anliegt und dadurch zentriert wird und gegen verrutschen gesichert ist, wie oben bereits erläutert. Anstelle mehrerer kleiner Verbindungselemente 34 kann auch ein größeres Rohr als Grundkörper des Verschlussteiles 30 dienen. In diesem Fall entspricht der Rohrdurchmesser (bei einem quadratischen Rohrquerschnitt die Rohrdiagonale) der oben genannten korrespondierenden Weite der Öffnung 14. Im vorliegenden Fall bilden die Platten 31, 32 die Ober- bzw. Unterseite des Verschlussteiles 30. Es können jedoch die Riegelelemente 33 seitlich an einem (z.B. rohrförmigen) Grundkörper angeordnet sein, um so einen geeigneten Verschlussteil 30 zu bilden.

In dem in Figur 2 dargestellten Beispiel arretieren die Riegelelemente 33 bei einer Drehbewegung des Verschlussteils 30 von der ersten (offenen) Stellung in die Schließstellung gleichzeitig alle Ausleger 20. Die für die Drehbewegung notwendige Kraft kann reduziert werden, wenn jene Bereiche der Riegelelemente 33, welche zuerst mit dem Zentralteil 10 und/oder dem jeweiligen Ausleger 20 in Kontakt kommen, nicht in gleichmäßigen (Winkel-) Abständen zueinander angeordnet sind (im dargestellten Fall alle 90°), sondern derart versetzt angeordnet sind, dass bei einer Drehbewegung nicht alle Ausleger gleichzeitig arretiert werden. Bei einer versetzten Anordnung der Riegelelemente 33 an dem Verschlussteil 30 können, je nach Winkelversatz der Riegelelemente, z.B. die vier Ausleger einer nach dem anderen arretiert werden, oder in zwei Schritten jeweils zwei Ausleger.

Die Riegelelemente 33 können einen zumindest teilweise keilförmigen Querschnitt aufweisen, so dass bei einer Drehbewegung des Verschlussteils 30 in die Schließstellung die Ausleger 20 gegen die (elastischen) Anschläge 11 geklemmt werden. Um ein Eingreifen der Riegelelemente an die Ausleger 20 und das Zentralteil 10 zu erleichtern können auch jene Bereiche der Ausleger 20 und des Zentralteils 10, die zuerst mit den Riegelelementen in Berührung kommen, eine leichte Schräge aufweisen.

Im Fall eines Helikopters, wie z.B. dem in Figur 1 dargestellten Quadrotor-Helikopter, sind in den Auslegern 20 elektrische Leitungen angeordnet, beispielsweise zur Stromversorgung der an oder in den Auslegern 20 montierten Motoren zum Antrieb der Rotoren. Die dazu notwendige Steuerung, die Navigation, sowie die Energieversorgung können im Zentralteil 10 angeordnet sein. An den Auslegern 20 und an dem Zentralteil können elektrische Kontakte derart angeordnet sein, dass im ausgeklappten Sollzustand (oder auch erst mit einer vollständigen Arretierung der Ausleger 20) elektrische Verbindungen zwischen den in den Auslegern 10 angeordneten elektrischen und elektronischen Komponenten und den Komponenten im Zentralteil 10 hergestellt werden. Somit wird die Notwendigkeit von Steckverbindern bei der Montage bzw. Inbetriebnahme des Helikopters vermieden.

Es können auch im Verschlussteil 30 elektrische und elektronische Komponenten angeordnet sein. In diesem Fall können auch elektrische Kontakte zwischen Verschlussteil 30 und Zentralteil 10 oder zwischen Verschlussteil 30 und Ausleger 20 derart angeordnet sein, dass in der Schließstellung des Verschlussteils 30 ein oder mehrere elektrische Kontakte (direkt oder auch induktiv/kapazitiv angekoppelt) hergestellt werden. Beispielsweise kann der Verschlussteil 30 dazu dienen eine Nutzlast (z.B. eine Kamera, eine Zweitbatterie, etc.) an dem Helikopter anzukoppeln. Nicht nur eine mechanische, sondern auch eine elektrische Ankopplung der Nutzlast an das Zentralteil 10 erfolgt über das Verschlussteil 30. Besonders einfach und praktisch kann der Austausch von verschiedenen Nutzlasten erfolgen, wenn an jeder Nutzlast ein Verschlussteil 30 als "Adapter" für das Fluggerät montiert ist. Statt elektrischen Kontakten, ist bei Verwendung von Glasfaserkabel zur optischen Steuerung auch eine optische Ankopplung bei der Arretierung möglich. Die erforderlichen Kontakte, können jedoch auch teilweise über konventionelle elektrische bzw. optische Steckverbindungen erfolgen.

Figur 3 zeigt ein Beispiel eines Verschlussteils 30 detaillierter. Es umfasst zwei im wesentlichen parallele Platten 31, 32, die über Abstandshülsen 34 verbunden (z.B. verschraubt, verklebt, etc.) sind. Das Verschlussteil ist so geformt, dass Riegelelemente 33 vom Grundkörper (d.h. dem inneren, durch die Hülsen 34 begrenzten Bereich) abstehen, welche in bzw. an den Zentralteil 10 und die Ausleger 20 eingreifen bzw. angreifen können, um diese zu arretieren (vgl. Figuren 2 und 4) .

Figur 4 zeigt die in Figur 2 dargestellte Verriegelung noch detaillierter. Die Figuren 4a und 4b sind Schnittdarstellung mit einem Teil zweier Ausleger 20, die über die Achsen 12 an dem Zentralteil 10 angelenkt sind. Das Zentral teil mit der Zentralen Öffnung 14, in die der Verschlussteil 30 eingesetzt wird umfasst auch die Anschläge 11. In Figur 4a sind die Ausleger in die Transportposition hochgeklappt (vgl. Figur 1b), Figur 4b zeigt das Verriegelungssystem in der Betriebsposition (vgl. Figur 1a) in arretierter Stellung.

Das erfindungsgemäße Verriegelungssystem kann nicht nur bei Quadrotor-Helikopter eingesetzt werden, sondern auch bei Helikopter mit zwei oder mehreren, jeweils auf einem Ausleger montierten Rotoren. Des weiteren kann das erfindungsgemäße Verriegelungssystem auch bei einem normalen Flugzeug zur Verriegelung von Flügel und Leitwerk eingesetzt werden. In diesem Fall bilden zwei der Ausleger die Flügel und zumindest ein weiterer Ausleger das Leitwerk des Flugzeuges. Bei einem Nurflügel-Flugzeug (flying wing) kann der Flügel aus zwei (z.B. klappbaren) Auslegern 20 und dem Zentralteil 10 zusammensetzbar und mit dem Verschlussteil 30 arretierbar sein. Die Erfindung ist auch bei Unterwasserfahrzeugen einsetzbar, die ähnlich aufgebaut sein können wie Luftfahrzeuge.

Nachdem die Erfindung eingehend beschrieben wurde, werden im folgenden noch einige Aspekte der Erfindung zusammengefasst, die einzeln oder in Kombination auftreten können.

Die Erfindung betrifft einerseits ein Verriegelungssystem, das folgendes aufweist: ein Zentral teil 10 mit mehreren Anschlagselementen 11; zwei oder mehr Ausleger 20, die an dem Zentralteil 10 angelenkt oder mit diesem lösbar verbunden sind; ein in den Zentralteil 10 zumindest teilweise einführbares und von diesem lösbares Verschlussteil 30, wobei Zentralteil 10 und Verschlussteil 30 derart geformt sind, dass bei einer Dreh- und/oder Verschiebebewegung des Zentralteils 10 relativ zum Verschlussteil 30 diese beiden Teile 10, 30 mechanisch derart ineinander greifen, dass die Ausleger 20 zwischen den Anschlagelementen 11 des Zentralteils 10 und dem Verschlussteil 30 arretiert werden.

Bei dem erwähnten Verriegelungssystem kann das Anschlagelement 11 im Vergleich zu dem Verschlusselement 12 und dem Ausleger 20 elastisch sein, sodass auf die Arretierung eine Vorspannkraft wirk. Dazu kann das Anschlagelement 11 aus einem schwingungsdämpfenden Material bestehen. Des weiteren können die mit dem Zentralteil 10 in Berührung kommenden Bereiche der Auslegers (20) elastisch sein und/oder aus einem schwingungsdämpfenden Material bestehen. Zusätzlich oder alternativ können die Riegelelemente 33 des Verschlussteils 30, die mit den Auslegern 10 in Berührung kommen, elastisch sein und/oder aus einem schwingungsdämpfenden Material bestehen.

Bei einem Ausführungsbeispiel des Verriegelungssystem kann das Zentralteil 10 für jeden Ausleger zumindest ein Führungselement 12 aufweisen, an denen die Ausleger 20 verschiebbar und/oder schwenkbar gelagert sind. Das Führungselement kann dabei eine Achse 12 oder eine Bohrung sein.

Der Zentralteil kann einen Formteil 13 umfassen, der zumindest eine einem jeden Ausleger 20 zugeordnete Ausnehmung 15 und/oder einen einem jeden Ausleger 20 zugeordneten Vorsprung aufweist, wobei jeder Ausleger 20 einen korrespondierenden Vorsprung 21 und/oder eine korrespondierende Ausnehmung aufweist, und Ausnehmung 15 sowie Vorsprung 21 jeweils so ausgestaltet sind, dass sie im arretierten Zustand ineinander eingreifen und die Ausleger 20 gegen eine Verschiebebewegung sichern.

An dem Zentral teil 10 können elektrische und/oder optische Kontakte angeordnet sein. In diesem Fall sind an dem dem Zentral teil 10 zugewandten Ende des Auslegers 20 korrespondierende elektrische Kontakte und/oder optische derart angeordnet, dass im arretierten Zustand eine elektrische und/oder optische Verbindung zwischen den Kontakten am Zentralteil 10 und den Kontakten am Ausleger 20 besteht.

Das Zentral teil 10 kann einen Formteil 13 umfassen, der eine zentrale Öffnung 14 aufweist, wobei das Verschlussteil 30 so geformt ist, dass es in einer ersten Stellung zumindest teilweise in die zentrale Öffnung 14 des Formteils 13 einsetzbar ist.

Die zentrale Öffnung 14 in dem Formteil 13 kann in unterschiedliche horizontale Richtungen unterschiedliche Abmessungen aufweisen. Der Verschlussteil 30 kann des Weiteren einen Grundkörper 34 und Riegelelemente 33 aufweisen, wobei die Riegelelemente 33 des Verschlussteils 30 derart angeordnet sind, dass sie in einer zweiten Stellung die Ausleger 20 formschlüssig an den Anschlagselementen 11 des Zentralteils 10 halten.

Das Verschlussteil 30 kann aus zwei miteinander verbundenen Formteilen 31, 32 bestehen, die derart geformt sind, dass der Verschlussteil 30 in einer ersten Stellung zumindest teilweise in die zentrale Öffnung 14 des Zentralteils 10 einführbar ist und dass nach einer Dreh- und/oder Schiebebewegung in eine zweite Position der Verschlussteil 30 den zumindest einen Ausleger 30 an dem Zentralteil 10 anliegend arretiert.

Des Weiteren können der Zentralteil 10 und das Verschlussteil 30 derart geformt sein, dass bei einer Dreh- und/oder Verschiebebewegung zwischen dem Verschlussteil 30 und dem Zentralteil 10 die beiden Teile 10, 30 und die Ausleger 20 mechanisch derart ineinander greifen, dass nicht sämtliche Ausleger 20 gleichzeitig arretiert werden. Insbesondere können Zentralteil 10 und Verschlussteil 30 derart geformt sein, dass bei einer Dreh- und/oder Verschiebebewegung zwischen dem Verschlussteil 30 und dem Zentralteil 10 die beiden Teile 10, 30 und die Ausleger 20 mechanisch derart ineinander greifen, dass ein Ausleger 20 nach dem anderen zwischen dem Anschlagelement 11 des Zentralteils 10 und dem Verschlussteil 30 arretiert wird. Schließlich kann das Zentralteil 10 und der Verschlussteil 30 derart geformt sein, dass bei einer Dreh- und/oder Verschiebebewegung zwischen dem Verschlussteil 30 und den Auslegern 20 der Zentralteil 10 und der Verschlussteil 30 die Ausleger 20 mechanisch derart umgreifen, dass die Ausleger 20 an dem Zentralteil 10 arretiert werden.

Eine Weiterbildung der Erfindung betrifft einen Helikopter, der folgendes aufweist: ein Zentralteil 10 mit mehreren Anschlagselementen 11; zwei oder mehr Rotoren, die jeweils an einem Ausleger 20 montiert sind, wobei die Ausleger 20 an dem Zentralteil 10 angelenkt oder mit diesem lösbar verbunden sind; ein in das Zentralteil 10 zumindest teilweise einführbares und von diesem lösbares Verschlussteil 30, wobei Zentralteil 10 und Verschlussteil 30 derart geformt sind, dass bei einer Dreh- und/oder Verschiebebewegung des Zentralteils 10 relativ zum Verschlussteil 30 diese beiden Teile 10, 30 mechanisch derart ineinander greifen, dass die Ausleger 20 zwischen den Anschlagelementen 11 des Zentralteils 10 und dem Verschlussteil 30 arretiert werden.

Das Zentralteil 10, die Ausleger 20 sowie das Verschlussteil 30 des Helikopters bilden dabei ein Verriegelungssystem wie oben beschrieben.

Eine andere Weiterbildung der Erfindung betrifft ein Flugzeug mit einem Verriegelungssystem wie oben beschreiben, wobei mindestens zwei Ausleger 20 durch klappbare Tragflächen und/oder Strukturteile des Flugzeuges gebildet sind. Dabei kann ein Ausleger 20 durch das Leitwerk des Flugzeugs gebildet sein.

Das erfindungsgemäße Verriegelungssystem kann darüber hinaus in einem Nurflügel-Flugzeug verwendet werden, wobei mindestens zwei Ausleger 20 durch klappbare Tragflächenteile des Nurflügel-Flugzeugs gebildet sind.

Schließlich kann das erfindungsgemäße Verriegelungssystem in einem U-Boot verwendet werden, wobei mindestens zwei Ausleger 20 je ein Antriebselement tragen und/oder, wobei die mindestens zwei Ausleger 20 durch klappbare Leitflächen des U-Bootes gebildet sind.

## Patentansprüche

1. Verriegelungssystem, das aufweist:
ein Zentralteil (10) mit mehreren Anschlagselementen (11);
zwei oder mehr Ausleger (20), die an dem Zentralteil (10) angelenkt oder mit diesem lösbar verbunden sind;
ein in den Zentralteil (10) zumindest teilweise einführbares und von diesem lösbares Verschlussteil (30), wobei Zentralteil (10) und Verschlussteil (30) derart geformt sind, dass bei einer Dreh- und/oder Verschiebebewegung des Zentralteils (10) relativ zum Verschlussteil (30) diese beiden Teile (10, 30) mechanisch derart ineinander greifen, dass die Ausleger (20) zwischen den Anschlagelementen (11) des Zentralteils (10) und dem Verschlussteil (30) arretiert werden.

2. Verriegelungssystem gemäß Anspruch 1, bei dem das Anschlagelement (11) im Vergleich zu dem Verschlusselement (12) und dem Ausleger (20) elastisch ist, sodass auf die Arretierung eine Vorspannkraft wirkt.

3. Verriegelungssystem gemäß Anspruch 1 oder 2,
bei dem die mit dem Zentralteil (10) in Berührung kommenden Bereiche der Auslegers (20) elastisch sind und/oder aus einem schwingungsdämpfenden Material bestehen und/oder
bei dem Riegelelemente (33) des Verschlussteils (30), die mit den Auslegern (10) in Berührung kommen, elastisch sind und/oder aus einem schwingungsdämpfenden Material bestehen.

4. Verriegelungssystem gemäß einem der Ansprüche 1 bis 3, bei dem das Zentralteil (10) für jeden Ausleger zumindest ein Führungselement (12) aufweist, an denen die Ausleger (20) verschiebbar und/oder schwenkbar gelagert sind.

5. Verriegelungssystem gemäß einem der Ansprüche 1 bis 4, bei dem
der Zentralteil (10) einen Formteil (13) umfasst, der zumindest eine einem jeden Ausleger (20) zugeordnete Ausnehmung (15) und/oder einen einem jeden Ausleger (20) zugeordneten Vorsprung aufweist, und bei dem
jeder Ausleger (20) einen korrespondierenden Vorsprung (21) und/oder eine korrespondierende Ausnehmung aufweist, wobei Ausnehmung (15) und Vorsprung (21) jeweils so ausgestaltet sind, dass sie im arretierten Zustand ineinander eingreifen und die Ausleger (20) gegen eine Verschiebebewegung sichern.

6. Verriegelungssystem gemäß einem der Ansprüche 1 bis 5, bei dem an dem Zentralteil (10) elektrische und/oder optische Kontakte und an dem dem Zentralteil (10) zugewandten Ende des Auslegers (20) korrespondierende elektrische Kontakte und/oder optische derart angeordnet sind, dass im arretierten Zustand eine elektrische und/oder optische Verbindung zwischen den Kontakten am Zentralteil (10) und den Kontakten am Ausleger (20) besteht.

7. Verriegelungssystem gemäß einem der Ansprüche 1 bis 6, bei dem der Zentralteil (10) einen Formteil (13) umfasst, der eine zentrale Öffnung (14) aufweist, wobei das Verschlussteil (30) so geformt ist, dass es in einer ersten Stellung zumindest teilweise in die zentrale Öffnung (14) des Formteils (13) einsetzbar ist.

8. Verriegelungssystem gemäß Anspruch 7, bei dem die zentrale Öffnung (14) im Formteil (13) in unterschiedliche horizontale Richtungen unterschiedliche Abmessungen aufweist.

9. Verriegelungssystem gemäß Anspruch 8, bei dem der Verschlussteil (30) einen Grundkörper (34) und Riegelelemente (33) aufweist, wobei die Riegelelemente (33) des Verschlussteils (30) derart angeordnet sind, dass sie in einer zweiten Stellung die Ausleger (20) formschlüssig an den Anschlagselementen (11) des Zentralteils (10) halten.

10. Verriegelungssystem gemäß Anspruch 9, bei dem das Verschlussteil (30) aus zwei miteinander verbundenen, Formteilen (31, 32) besteht, die derart geformt sind, dass der Verschlussteil (30) in einer ersten Stellung zumindest teilweise in die zentrale Öffnung (14) des Zentralteils (10) einführbar ist und dass nach einer Dreh- und/oder Schiebebewegung in eine zweite Position der Verschlussteil (30) den zumindest einen Ausleger (30) an dem Zentralteil (10) anliegend arretiert.

11. Verriegelungssystem gemäß einem der Ansprüche 1 bis 10, bei dem Zentralteil (10) und Verschlussteil (30) derart geformt sind, dass bei einer Dreh- und/oder Verschiebebewegung zwischen dem Verschlussteil (30) und dem Zentralteil (10) die beiden Teile (10, 30) und die Ausleger (20) mechanisch derart ineinander greifen, dass nicht sämtliche Ausleger (20) gleichzeitig arretiert werden.

12. Verriegelungssystem gemäß Anspruch 11, bei dem Zentralteil (10) und Verschlussteil (30) derart geformt sind, dass bei einer Dreh- und/oder Verschiebebewegung zwischen dem Verschlussteil (30) und dem Zentralteil (10) die beiden Teile (10, 30) und die Ausleger (20) mechanisch derart ineinander greifen, dass ein Ausleger (20) nach dem anderen zwischen dem Anschlagelement (11) des Zentralteils (10) und dem Verschlussteil (30) arretiert wird.

13. Verriegelungssystem gemäß einem der Ansprüche 1 bis 12, bei dem Zentralteil (10) und Verschlussteil (30) derart geformt sind, dass bei einer Dreh- und/oder Verschiebebewegung zwischen dem Verschlussteil (30) und den Auslegern (20) der Zentralteil (10) und der Verschlussteil (30) die Ausleger (20) mechanisch derart umgreifen, dass die Ausleger (20) an dem Zentralteil (10) arretiert werden.

14. Helikopter, der aufweist:
ein Zentralteil (10) mit mehreren Anschlagselementen (11);
zwei oder mehr Rotoren, die jeweils an einem Ausleger (20) montiert sind; und
ein in das Zentralteil (10) zumindest teilweise einführbares und von diesem lösbares Verschlussteil (30), wobei Zentralteil (10), Ausleger (20) und Verschlussteil (30) ein Verriegelungssystem gemäß einem der Ansprüche 1 bis 13 bilden.

15. Flugzeug mit einem Verriegelungssystem gemäß einem der Ansprüche 1 bis 13, wobei mindestens zwei Ausleger (20) durch klappbare Tragflächen oder Tragflächenteile des Flugzeuges gebildet sind.

## Claims

1. Locking system comprising:
a central part (10) with a plurality of stop elements (11);
two or more outriggers (20), which are hinged to the central part (10) or detachably connected thereto;
a closing element (30), which is at least partially insertable into the central part (10) and detachable therefrom, the central part (10) and the closing element (30) being formed in such a way that during a rotational and/or sliding movement of the central part (10) in relation to the closing element (30), these two parts (10, 30) mechanically engage in such a way that the outriggers (20) between the stop elements (11) of the central part (10) and the closing element (30) are locked.

2. Locking system in accordance with claim 1, in which the stop element (11) is elastic in comparison to the locking element (12) and the outrigger (20), so that a pre-tension force is applied to the locking mechanism.

3. Locking system in accordance with claim 1 or claim 2,
in which the regions of the outriggers (20) that come in contact with the central part (10) are elastic and/or are composed of a vibration-reducing material and/or
in which the locking elements (33) of the closing element (30) that come in contact with the outriggers (10) are elastic and/or are composed of a vibration-reducing material.

4. Locking system in accordance with one of the claims 1 to 3, in which the central part (10) includes for each outrigger at least one guiding element (12), on which the outriggers (20) are slideably or pivotally mounted.

5. Locking system in accordance with one of the claims 1 to 4, in which
the central part (10) includes a molded part (13), which includes at least one recess (15) matched to each outrigger (20) and/or a projection (21) matched to each outrigger (20) and in which
every outrigger (20) has a corresponding projection (21) and/or a corresponding recess (15), whereas the recess (15) and the projection (21) are formed in such a way that, in a locked state, they engage and secure the outriggers (20) against a sliding movement.

6. Locking system in accordance with one of the claims 1 to 5, in which electrical and/or optical contacts are so arranged on the central part (10) and corresponding electrical and/or optical contact are so arranged on the end of the outrigger (20) that is positioned towards the central part (10) that, in a locked state, an electrical and/or optic connection exists between the contacts on the central part (10) and the contacts on the outrigger (20).

7. Locking system in accordance with one of the claims 1 to 6, in which the central part (10) includes a molded part (13), which has a central opening (14), whereas the closing element (30) is formed in such a way that, in a first position, it is at least partially insertable into the central opening (14) of the molded part (13).

8. Locking system in accordance with claim 7, in which the central opening (14) in the molded part (13) has different dimensions in different horizontal directions.

9. Locking system in accordance with claim 8, in which the closing part (30) includes a base body (34) and locking elements (33), whereas the locking elements (33) of the closing part (30) are so arranged that, in a second position, they positively hold the outriggers (20) on the stop elements (11) of the central part (10).

10. Locking system in accordance with claim 9, in which the closing part (30) consists of two interconnected molded parts (31, 32), that are formed in such a way that the closing part (30), in a first position, is at least partially insertable into the central opening (14) of the central part (10) and that, following a rotational and/or sliding movement into a second position, the closing part (30) locks the at least one outrigger (30) adjacent to the central part (10).

11. Locking system in accordance with one of the claims 1 to 10, in which the central part (10) and the closing part (30) are formed in such a way that, during a rotational and/or sliding movement between the closing part (30) and the central part (10), these two parts (10, 30) and the outriggers (20) mechanically engage in such a way that not all outriggers (20) are simultaneously locked.

12. Locking system in accordance with claim 11, in which the central part (10) and the closing part (30) are formed in such a way that, during a rotational and/or sliding movement between the closing part (30) and the central part (10), these two parts (10, 30) and the outriggers (20) mechanically engage in such a way that one outrigger (20) after another is locked between the stop element (11) of the central part (10) and the closing part (30).

13. Locking system in accordance with one of the claims 1 to 12, in which the central part (10) and the closing part (30) are formed in such a way that, during a rotational and/or sliding movement between the closing part (30) and the outriggers (20), the central part (10) and the closing part (30) mechanically encompass the outriggers (20) in such a way that the outriggers (20) are locked onto the central part (10).

14. Helicopter, that includes:
a central part (10) with a plurality of stop elements (11);
two or more rotors, each mounted on an outrigger (20); and
a closing part (30), which is at least partially insertable into and detachable from the central part (10), whereas the central part (10), the outriggers (20) and the closing part (30) form a locking system in accordance with one of the claims 1 to 13.

15. Aircraft with a locking system in accordance with one of the claims 1 to 13, whereas at least two outriggers (20) are formed by foldable wings or by portions of wings of the aircraft

## Revendications

1. Système de verrouillage comprenant :
- une partie centrale (10) ayant plusieurs éléments de liaison (11),
- deux ou plusieurs bras (20) articulés sur la partie centrale (10) ou reliés de manière amovible à celle-ci,
- une pièce de fermeture (30) qui s'introduit au moins partiellement dans la partie centrale (10) et qui peut être détachée de celle-ci, la pièce centrale (10) et la pièce de fermeture (30) étant formées pour que par un mouvement de rotation et/de coulissement de la partie centrale (10) par rapport à la partie de fermeture (30), ces deux parties (10, 30) s'interpénètrent mécaniquement pour bloquer les bras (20) entre les éléments de liaison (11) de la partie centrale (10) et de la pièce de fermeture (30).

2. Système de verrouillage selon la revendication 1,
dans lequel l'élément de liaison (11) est élastique par comparaison à l'élément de fermeture (12) et au bras (20) de sorte qu'une force de précontrainte agit sur le blocage.

3. Système de verrouillage selon la revendication 1 ou 2,
dans lequel les zones du bras (20) arrivent en contact avec la partie centrale (10) sont élastiques et/ou sont en un matériau amortissant les vibrations et/ ou :
- les éléments de verrouillage (33) de la pièce de fermeture (30) qui arrivent en contact avec les bras (10) sont élastiques et/ou sont réalisés en un matériau amortissant les vibrations.

4. Système de verrouillage selon l'une des revendications 1 à 3,
dans lequel la partie centrale (10) comporte au moins un élément de guidage (12) pour chaque bras et qui reçoit le bras (20) de manière coulissante et/ou pivotante.

5. Système de verrouillage selon l'une des revendications 1 à 4, dans lequel :
- la partie centrale (10) comporte une partie moulée (13), ayant au moins un évidement (15) associé à chaque bras (20) et/ou une partie en saillie associée à chaque bras (20) et dans lequel :
- chaque bras (20) a une partie en saillie (21) correspondante et/ou un évidement correspondant, l'évidement (15) et la partie en saillie (21) étant réalisés pour qu'à l'état bloqué, ils s'interpénètrent et bloquent le mouvement de coulissement du bras (20).

6. Système de verrouillage selon l'une des revendications 1 à 5,
dans lequel la partie centrale (10) a des contacts électriques et/ou optiques et sur lequel l'extrémité du bras (20) tournée vers la partie centrale (10) a des contacts électriques et/ou optiques correspondants, de façon qu'à l'état bloqué, il subsiste une liaison électrique et/ou optique entre les contacts de la partie centrale (10) et les contacts des bras (20).

7. Système de verrouillage selon l'une des revendications 1 à 6,
dans lequel la partie centrale (10) comporte une partie moulée (13) ayant une ouverture centrale (14), la pièce de fermeture (30) étant formée pour que dans une première position, elle puisse se loger au moins partiellement dans l'ouverture centrale (14) de la pièce de forme (13).

8. Système de verrouillage selon la revendication 7,
dans lequel l'orifice central (14) de la pièce de forme (13) a des dimensions différentes dans les différentes directions horizontales.

9. Système de verrouillage selon la revendication 8,
dans lequel la pièce de fermeture (30) comporte un corps de base (34) et des éléments de verrouillage (33), ces éléments de verrouillage (33) de la pièce de fermeture (30) étant disposés pour que dans une seconde position, elles tiennent le bras (20) par une liaison par la forme à l'élément de butée (11) de la partie centrale (10).

10. Système de verrouillage selon la revendication 9,
dans lequel la pièce de fermeture (30) se compose de deux pièces de forme (31, 32) reliées l'une à l'autre et qui sont formées pour que la pièce de fermeture (30), dans une première position, puisse s'introduire au moins partiellement dans l'ouverture centrale (14) de la partie centrale (10) et qu'après un mouvement de rotation et/ou de coulissement, dans une seconde position, la pièce de fermeture (30) bloque le bras (20) en appui contre la partie centrale (10).

11. Système de verrouillage selon l'une des revendications 1 à 10
dans lequel la partie centrale (10) et la pièce de fermeture (30) sont formées pour qu'en cas de mouvement de rotation et/ou de coulissement entre la pièce de fermeture (30) et la partie centrale (10), les deux parties (10, 30) et les bras (20) s'interpénètrent mécaniquement de façon à ne pas arrêter simultanément tous les bras (20).

12. Système de verrouillage selon la revendication 11
dans lequel la partie centrale (10) et la pièce de fermeture (30) sont formées pour qu'avec un mouvement de rotation et/ou de coulissement, entre la pièce de fermeture (30) et la partie centrale (10), les deux parties (10, 30) et le bras (20) s'interpénètrent mécaniquement pour qu'un bras (20), l'un après l'autre soit bloqué entre la butée (11) de la partie centrale (10) et la pièce de fermeture (30).

13. Système de verrouillage selon l'une des revendications 1 à 12
dans lequel la partie centrale (10) et la pièce de fermeture (30) sont formées pour qu'avec un mouvement de coulissement et/ou de rotation entre la pièce de fermeture (30) et les bras (20), la partie centrale (10) et la pièce de fermeture (30) entourent mécaniquement les bras (20) pour que les bras (20) soient bloqués sur la partie centrale (10).

14. Hélicoptère comprenant :
- une partie centrale (10) avec plusieurs éléments de liaison (11),
- deux ou plusieurs rotors installés, chacun sur un bras (20),
- une pièce de fermeture (30) qui s'introduit au moins partiellement dans la partie centrale (10) et qui peut être détachée de celle-ci, la partie centrale (10), le bras (20) et la pièce de fermeture (30) formant un système de verrouillage selon l'une quelconque des revendications 1 à 13.

15. Avion comportant un système de verrouillage selon l'une des revendications 1 à 13 dont au moins deux bras (20) sont constitués par des surfaces portantes rabattables ou des parties de surface portantes d'avion.
